# EUROPEAN PATENT SPECIFICATION

(11) **EP 2 432 906 B1**
(45) Date of publication and mention of the grant of the patent: **05.10.2016**
(21) Application number: 10778008.2
(22) Date of filing: 20.05.2010
(51) Int. Cl.: C22C 38/18, F16C 33/00

(54) **BEARING COMPONENT**
LAGERKOMPONENTE
COMPOSANT DE PALIER

(30) Priority: 20.05.2009 SE 0900683
(43) Date of publication of application: 28.03.2012
(73) Proprietor: Aktiebolaget SKF, 415 50 Göteborg (SE)
(72) Inventor: LUND, Thore, S-416 61 Göteborg (SE); STRANDELL, Ingemar, S-433 70 Sävedalen (SE)
(74) Representative: Schonecke, Mitja
(86) International application number: PCT/SE2010/000138
(87) International publication number: WO 2010/134867

(56) References cited:
- EP-A1- 1 354 971
- EP-A2- 1 094 124
- WO-A1-93/24671
- WO-A1-2006/120875
- GB-A- 2 155 951
- JP-A- 6 002 073
- US-A- 4 317 678
- US-A1- 2005 265 886

## Description

### TECHNICAL FIELD

The present invention concerns a bearing component, i.e. a component that constitutes at least part of one of the following: a ball bearing, roller bearing, ball thrust bearing, roller thrust bearing, tapered roller thrust bearing, ball screw, or a component for an application in which is subjected to alternating Hertzian stresses, such as rolling contact or combined rolling and sliding.

### BACKGROUND OF THE INVENTION

Stringent requirements have been established for the quality of bearing steel, especially as regards its content of non-metallic inclusions. Bearing components can namely suffer from contact fatigue, i.e. the cracking and subsequent pitting of surfaces subjected to alternating Hertzian stresses such as rolling contact or combined rolling and sliding, and non-metallic inclusions, such as certain sulphide inclusions, have been found to initiate sub-surface damage that may lead to crack growth and spalling. Furthermore, since sulphides in bearing steels have an elongated shape, they tend to become oriented and thus make the steel anisotropic.

In order to avoid these problems with sulphides it is however not advantageous to reduce the sulphur content of the bearing steel to as close to zero as possible since this results in magnesium and calcium in the melt entering oxide inclusions in the form of aluminates and forming undesired complex aluminate inclusions. Pure aluminates are hard and brittle; they will break during rolling and do not therefore pose a substantial problem to manufacturers of bearing components with high degrees of forming deformation. However, complex aluminates can be hard but they are not brittle so they will remain intact during rolling and will therefore be incorporated into the finished bearing component. If a complex aluminate inclusion becomes located in an area of the bearing component subject to heavy loading, this is where a fatigue failure will start.

European patent application no. EP 1 094 124 concerns a super clean steel for use in objects subjected to heavy loads in all directions. The steel disclosed therein comprises, in weight, between 8 ppm to 12 ppm S. A sulphur content of 8 ppm or above counteracts the release of calcium from slag and thus the formation of globular oxide inclusions, and a sulphur content below 12 ppm reduces the enrichment of dangerous sulphides in castings.

JPH 0602073 concerns the manufacture of a bearing steel to improve the service life of a bearing using high carbon chromium bearing steel as a base and incorporating a specified amount of calcium therein. High carbon chromium bearing steel (JIS SUJ1 to 5 or the like) is used as a base and is incorporated with, by weight, 0.01 to 0.012% calcium to prepare the bearing steel. In this way, the maximum dimension of oxide non-metallic inclusions included in the baring steel can be regulated to about 5mu, and the service life of a bearing made from this steel can be improved. Moreover, a steel incorporating calcium, e.g. constituted of about 0.99 to 1.01% C, about 0.27 to 0.29% Si, about 0.40 to 0.43% Mn, about 1.44 to 1.47% Cr and about 0.0009 to 0.120% Ca, is used.

US 4 317 678 discloses that calcium or a calcium-bearing material is added to an aluminum-deoxidized steel in an amount which is sufficient to establish a calcium concentration exceeding the aluminum content by a value greater than about 0.14.

### SUMMARY OF THE INVENTION

An object of the invention is to provide a bearing component with improved fatigue properties.

The object of the invention is achieved by a bearing component comprising steel that comprises by weight, 10-30 ppm Ca, max 20 ppm S and max 15 ppm O. Preferably the steel comprises 10-30ppm Ca, max 20 ppm S and max 10 ppm O, or most preferably 10-30ppm Ca, max 20 ppm S and max 8 ppm O.

In conventional bearing steels, the dominating inclusion type is sulphides due to the fact that the sulphur content normally is higher than the oxygen content. A very large number of the sulphide inclusions contain embedded or encapsulated oxide inclusions, often at the sulphide inclusion ends. When these embedded or encapsulated oxide inclusions have matrix contact, these oxy-sulphides will act as crack initiators. The life time of a bearing component is most adversely affected by oxygen-containing inclusions, also such as sulphide inclusions containing encapsulated or embedded oxide inclusions.

The addition of calcium to bearing steel (i.e. steel suitable for use in a bearing component) after the sulphur content has been reduced to a level substantially of the same order as the oxygen content, will reduce the total number of sulphide inclusions remaining in the steel and it will modify the shape of the remaining inclusions into one that is less detrimental to mechanical properties in the final bearing component. It has namely been found that the addition of calcium to bearing component steel will result in less than 5% of the sulphide inclusions containing encapsulated or embedded oxide inclusions. The addition of calcium will also result in all of the sulphide inclusions having an aspect ratio of less than 3:1 (i.e. the ratio of the inclusion's largest diameter to the inclusion's shortest diameter) and in the maximum sulphide inclusion length being 125 µm at a Reduced Variate equal to 3 evaluated using the ASTM E2283-03 Extreme Value Analysis Standard. Such sulphide inclusions are less damaging to a bearing component as regards its fatigue properties. Furthermore, the absence of sulphide inclusions having an aspect ratio greater than 3:1 and having a maximum length greater than 125 µm gives the steel more uniform properties in all directions and thereby reduces directional anisotropy in the steel.

According to an embodiment of the invention the bearing component comprises steel that contains between 0.70 to 1.20% C. The steel may for example be of ASTM A295 / A295M - 09 type, such ISO 683-17:1999 ASTM A-295-98, or any other high-carbon through-hardened steel that is suitable for an application in which it is subjected to alternating Hertzian stresses, such as rolling contact or combined rolling and sliding.

According to an embodiment of the invention the bearing component constitutes at least part of one of the following: a ball bearing, roller bearing, ball thrust bearing, roller thrust bearing, tapered roller thrust bearing, ball screw, or a component for an application in which is subjected to alternating Hertzian stresses, such as rolling contact or combined rolling and sliding, for example a roller bearing application, a linear motion application, a gear box application or a torque transmitting application.

### BRIEF DESCRIPTION OF THE DRAWINGS

The present invention will hereinafter be further explained by means of non-limiting examples with reference to the appended figures in which;
- Figure 1: schematically shows a bearing component according to an embodiment of the invention,
- Figure 2: shows the percentage of sulphide inclusions containing encapsulated or embedded oxide inclusions in standard steel, and
- Figure 3: shows the percentage of sulphide inclusions containing encapsulated or embedded oxide inclusions in the steel of a bearing component according to the present invention.

It should be noted that the drawing has not been drawn to scale and that the dimensions of certain features have been exaggerated for the sake of clarity.

### DETAILED DESCRIPTION OF EMBODIMENTS

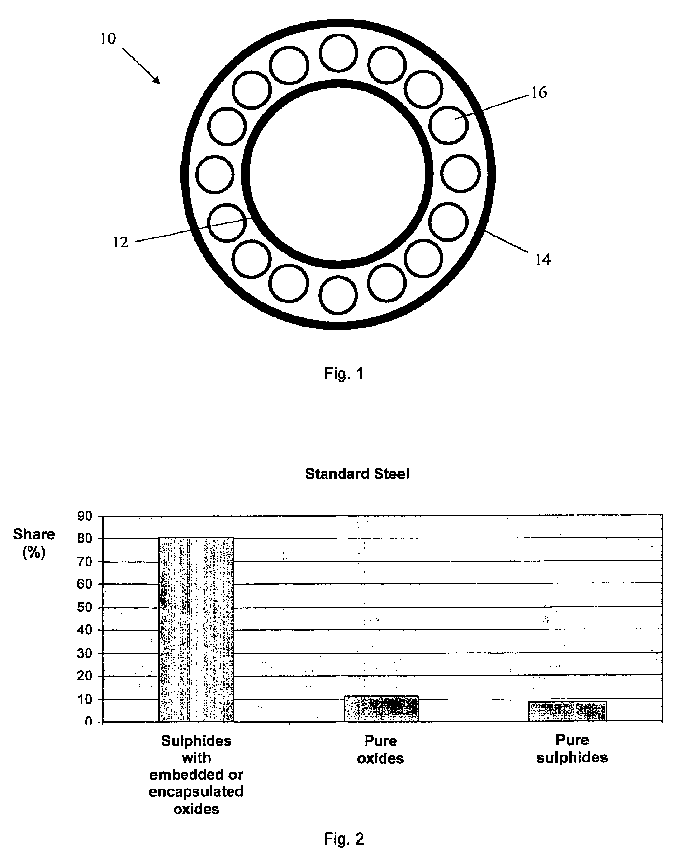

Figure 1 schematically shows an example of a bearing component 10, namely a ball bearing that may range in size from 10 mm diameter to a few metres diameter and have a load-carrying capacity from a few tens of grams to many thousands of tonnes. The bearing component according to the present invention may namely be of any size and have any load-carrying capacity. The bearing component 10 has an inner race 12 and an outer race 14 and a set of balls 16. The inner race 12, the outer race 14 and/or the balls 16 of the ball bearing 10, and preferably all of the rolling contact parts of the ball bearing 10 are manufactured from steel that comprises, by weight, 10-30 ppm Ca, max 20 ppm S and max 15 ppm O, preferably 10-30 ppm Ca, max 20 ppm S and max 8 ppm O. Less than 5% of the sulphide inclusions contained in the steel contain encapsulated or embedded oxide inclusions. All of the sulphide inclusions have an aspect ratio less than 3:1 and the maximum length of the suphide inclusions is 125 µm at a Reduced Variate equal to 3 (determined using ASTM E2283-03 Extreme Value Analysis).

The steel from which at least part of the ball bearing 10 is manufactured may for example contain between 0.70 to 1.20% carbon. For example the steel may have the following composition:

| | |
|---|---|
| 0.70-0,95 | weight-% carbon |
| 0.05-1.5 | weight-% silicon |
| 0.15-0.50 | weight-% manganese |
| 0.5-2.5 | weight-% chromium |
| 0.10-1.5 | weight-% molybdenum |
| max. 0.25 | weight-% vanadium |

the remainder being Fe, and normally occurring impurities comprising 10-30 ppm Ca, max 20 ppm S and max 15 ppm O, preferably max 10 ppm O or most preferably max 8 ppm O.

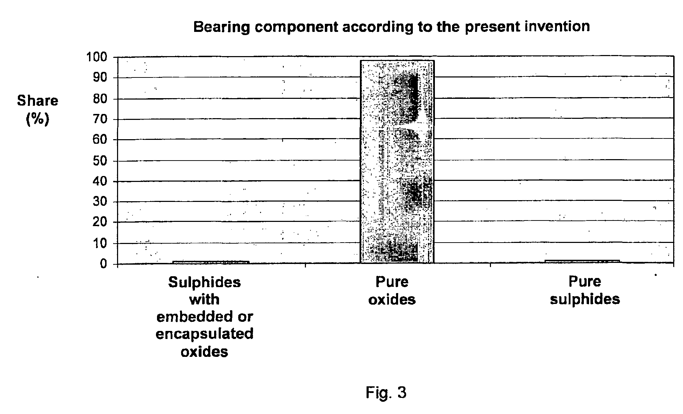

Figures 2 and 3 show the percentage of sulphide inclusions containing encapsulated or embedded oxide inclusions in standard steel, and in the steel of a bearing component according to the present invention respectively. It can be seen that only about 1 % of the sulphide inclusions of the steel of a bearing component according to the present invention contain encapsulated or embedded oxide inclusions. On the contrary, in standard steel, about 80% of the steel's sulphide inclusions contain encapsulated or embedded oxide inclusions. It has been found that the fatigue strength (measured in rotating beam tests at 950 MPa) of the steel of a bearing component according to the present invention is substantially higher than the fatigue strength of standard steel.

## Claims

1. Bearing component (10) that comprises steel, **characterized in that** said steel comprises, by weight, 10-30 ppm Ca, max 20 ppm S and max 15 ppm O and **in that** said steel includes sulphide inclusions and less than 5% of the sulphide inclusions contain encapsulated or embedded oxide inclusions.

2. Bearing component (10) according to claim 1, **characterized in that** said steel includes sulphide inclusions and the maximum length of said sulphide inclusions is 125 µm at a Reduced Variate equal to 3.

3. Bearing component (10) according to claim 1 or 2, **characterized in that** said steel comprises 10-30 ppm Ca, max 20 ppm S and max 10 ppm O.

4. Bearing component (10) according to claim 1 or 2, **characterized in that** said steel includes sulphide inclusions and all of said sulphide inclusions have an aspect ratio less than 3:1.

5. Bearing component (10) according to any of the preceding claims, **characterized in that** said steel contains between 0.70 to 1.20% C.

6. Bearing component (10) according to any of the preceding claims, **characterized in that** it constitutes at least part of one of the following: a ball bearing, roller bearing, ball thrust bearing, roller thrust bearing, tapered roller thrust bearing, ball screw, or a component for an application in which is subjected to alternating Hertzian stresses, such as rolling contact or combined rolling and sliding.

## Patentansprüche

1. Lagerkomponente (10), die Stahl umfasst, **dadurch gekennzeichnet, dass** der Stahl, auf das Gewicht bezogen, 10 - 30 ppm Ca, max. 20 ppm S und max. 15 ppm 0 umfasst und dass der Stahl Sulfideinschlüsse enthält und weniger als 5 % der Sulfideinschlüsse eingekapselte oder eingebettete Oxideinschlüsse enthalten.

2. Lagerkomponente (10) nach Anspruch 1, **dadurch gekennzeichnet, dass** der Stahl Sulfideinschlüsse enthält und die maximale Länge der Sulfideinschlüsse 125 µm bei einer reduzierten Variablen gleich 3 beträgt.

3. Lagerkomponente (10) nach Anspruch 1 oder 2, **dadurch gekennzeichnet, dass** der Stahl 10 - 30 ppm Ca, max. 20 ppm S und max. 10 ppm 0 umfasst.

4. Lagerkomponente (10) nach Anspruch 1 oder 2, **dadurch gekennzeichnet, dass** der Stahl Sulfideinschlüsse enthält und alle der Sulfideinschlüsse ein Seitenverhältnis von weniger als 3:1 aufweisen.

5. Lagerkomponente (10) nach einem der vorhergehenden Ansprüche, **dadurch gekennzeichnet, dass** der Stahl 0,70 bis 1,20 % C enthält.

6. Lagerkomponente (10) nach einem der vorhergehenden Ansprüche, **dadurch gekennzeichnet, dass** sie mindestens einen Teil der Folgenden bildet: eines Kugellagers, eines Rollenlagers, eines Axialkugellager, eines Axialrollenlager, eines Kegelaxialrollenlagers, einer Kugelrollspindel oder einer Komponente für eine Anwendung, wobei sie abwechselnden Hertz'sehen Pressungen wie Wälzkontakt oder kombiniertem Walzen und Gleiten unterworfen wird.

## Revendications

1. Composant de palier (10) comprenant de l'acier, **caractérisé en ce que** ledit acier comprend, en poids, 10-30 ppm Ca, au maximum 20 ppm S et au maximum 15 ppm 0 et **en ce que** ledit acier comporte des inclusions de sulfure et moins de 5 % des inclusions de sulfure contiennent des inclusions d'oxyde encapsulées ou noyées.

2. Composant de palier (10) selon la revendication 1, **caractérisé en ce que** ledit acier comporte des inclusions de sulfure et la longueur maximale desdites inclusions de sulfure est de 125 µm en utilisant un écart-type réduit égal à 3.

3. Composant de palier (10) selon la revendication 1 ou 2, **caractérisé en ce que** ledit acier comprend 10-30 ppm Ca, au maximum 20 ppm S et au maximum 10 ppm 0.

4. Composant de palier (10) selon la revendication 1 ou 2, **caractérisé en ce que** ledit acier comprend des inclusions de sulfure et la totalité desdites inclusions de sulfure ont un rapport d'aspect inférieur à 3:1.

5. Composant de palier (10) selon l'une quelconque des revendications précédentes, **caractérisé en ce que** ledit acier contient entre 0,70 et 1,20 % C.

6. Composant de palier (10) selon l'une quelconque des revendications précédentes, **caractérisé en ce qu'**il constitue au moins une partie de l'un des éléments suivants : un palier à billes, un palier à rouleaux, un palier à butée à billes, un palier à butée à rouleaux, un palier à butée à rouleaux coniques, une vis à billes, ou un composant pour une application soumis à des contraintes hertziennes alternées, comme un contact de roulement ou un roulement et un glissement combinés.
